# EUROPÄISCHE PATENTSCHRIFT

(11) **EP 1 221 601 B1**
(45) Veröffentlichungstag und Bekanntmachung des Hinweises auf die Patenterteilung: **13.02.2008**
(21) Anmeldenummer: 01130910.1
(22) Anmeldetag: 27.12.2001
(51) Int. Cl.: G01K 7/22

(54) **Verfahren zum Herstellen eines elektrischen Bauteils sowie diesbezügliches Bauteil**
Method for making an electrical element, and such an element
Méthode pour fabriquer un élément électrique, ainsi que ledit élément

(30) Priorität: 04.01.2001 DE 10100193
(43) Veröffentlichungstag der Anmeldung: 10.07.2002
(73) Patentinhaber: VWH Vorrichtungs- und Werkzeugbau Herschbach GmbH, 56414 Herschbach (DE)
(72) Erfinder: Naas, Roman, 56459 Brandscheid (DE); Rheinfeld, Dieter, Dr., 80809 München (DE)
(74) Vertreter: Schmidt, Horst

(56) Entgegenhaltungen:
- EP-A- 0 821 222

## Beschreibung

Die Erfindung betrifft ein Verfahren zum Herstellen eines elektrischen Bauteils gemäss dem Oberbegriff des Patentanspruchs 1.

Die Erfindung bezieht sich insbesondere auf die Bereitstellung von Sensorbauteilen, wie sie in Kraftfahrzeugen zur Erfassung verschiedener Parameter, wie der Umgebungstemperatur, zum Einsatz kommen. Hierbei wird ein zumeist balliges, z.B. kugeliges oder linsenförmiges Sensorelement mit einem axialen Ende von Leiterpfaden z.B. verlötet und diese wiederum an ihrem anderen axialen Ende mit steifen Anschlusslementen elektrisch verbunden. Um eine unerwünschte thermische Wechselwirkung zwischen den Leitpfaden und dem Sensorelement zu vermeiden bzw. minimieren, sollten erstere möglichst geringe Querschnittsabmessungen haben, was andererseits einen instabilen Halt des Sensorelementes in der verlöteten Anordnung zur Folge hat. Nach diesen vorbereitenden Massnahmen wurde bislang eine Kappe aus einem Kunstoffmaterial durch einen Spritzgiessvorgang geschaffen. Das Innere der Kappe wurde anschliessend mit einem geeigneten Isolier- und Einbettungsmedium gefüllt und die Kappe dann auf das Sensorelement aufgesetzt, um diesem den gewünschten Halt zu verleihen und das Sensorlelement nebst angrenzenden Bereichen der Leiterpfade vor Umwelteinflüssen, wie Feuchtigkeit, Schmutz etc, zu schützen. Ausserdem werden im allgemeinen die Anschlusselemente von einem Steckergehäuse umgeben. In diesem Fall musste bislang die Kappe in einem weiteren Fertigungschritt mit dem Steckergehäuse fest, z.B. durch Schweissen verbunden werden. Die separate Herstellung der Schutzkappe, das anschliessende Befüllen mit einem Isolier- und Einbettungsmedium, das Einführen des Sensorelements und das anschliessende Verschweissen der Schutzkappe mit dem Steckergehäuse bedeuten mehrfache, das Produkt verteuernde Fertigungsstufen, wobei es sich vorwiegend um Produkte handelt, die in grosser Anzahl bereitgestellt werden müssen. Bei einem bekannten Verfahren (EP 0 821 222 A) wird das kugelige Sensorelement beim Spritzgiessvorgang nur von Anschlussdrähten in sein Lage in der Kunststoffgiessform gehalten. Selbst wenn diese Anschlussdrähte besonders ausgebildet sind, kann eine unerwünschte Verlagerung des Sensorlementes unter der Kunststoffschmelze, die in die Kunststoffgiessform unter hohem Druck eingeführt wird, auf das Sensorelement ausgeübten Strömungskräften nicht vermieden werden, so dass das Sensorelement in unterschiedlich starken Kunststoffschichten im fertigen Produkt eingebettet wird. Dies kann sich nachteilig auf die Ansprechempfindlichkeit des Sensorelementes und die Reproduzierbarkeit der Messungen auswirken, und ausserdem ist nicht immer gewährleistet, dass das empfindliche Sensorelement zuverlässig gegenüber schädlichen Umgebungseinflüssen ausreichend abgeschirmt ist. Dennoch ist der baulichen Aufwand für die Kunststoffgiessform für die Durchführung des bekannten Verfahren vergleichsweise gross.

Der Erfindung liegt demzufolge die Aufgabe zugrunde, ein Verfahren der gattungsgemässen Art zu schaffen, das eine wirtschaftlichere Fertigung von elektrischen Bauteilen mit verbessertem Betriebsverhalten erlaubt, indem das Sensorelement mit wenigen Fertigungsschritten stets genau im Kunststoffmaterial positioniert und zuverlässig gegenüber Umgebungseinflüssen abgeschirmt werden kann.

Diese Aufgabe wird erfindungsgemäss durch die Merkmale des Patentanspruches 1 gelöst. Die Erfindung bewirkt, dass das Sensorelement während des Spritzgiessvorganges in einer bestimmten Art und Weise lagefiexierend in der Spritzgiessform abgestützt wird, so dass die mit hohem Druck und hoher kinetischer Energie in die Giessform einströmende Kunststoffschmelze keine unerwünschten Lageänderungen des Sensorelements bewirken kann. Dadurch wird die elektrische Verbindung des Sensorelementes mit den vorzugsweise dünnen Leitern nicht beeinträchtigt und werden die Leiter selbst, z.B. durch Überdehnung, nicht beschädigt. Gleichzeitig ist sichergestellt, dass das Sensorlement stets eine gewünschte, z.B. zentrische Lage im angespritzten Formteil einnimmt. Das Sensorelement und die angrenzenden Bereiche der Leiterpfade, wenn erwünscht zusätzlich auch die gesamten Leiter und die daran angrenzenden Bereiche der Anschlusselemente, werden hermetisch nach aussen gegenüber Umwelteinflüssen, wie Feuchtigkeit, abgeschirmt. Ferner lässt sich eine Minimierung der Dicke der das Sensorelement gegenüber der Aussenumgebung abschirmenden Isolierschicht erreichen, was eine verbessertes Ansprechverhalten des Sensorelementes ergibt. Ferner könnte gleichzeitig ein die freiliegenden Bereiche der Anschlusselemente umgebendes Steckeraufnahmegehäuse geschaffen werden. Als Alternative könnte ein solches Gehäuse auch in einem weiteren Kunststoff-Spritzgiessvorgang an dem Formteil angeformt werden, in dem das Sensorelement eingebettet ist. Durch die Erfindung wird daher ein elektrisches Sensorbauteil mit verbessertem Betriebsverhalten bei gleichzeitig verringerten Fertigungskosten bereitgestellt

Die Erfindung wird nachfolgend anhand von Ausführungsformen und der Zeichnung näher erläutert. Es zeigen:
Fig. 1 in längsgeschnittener Ansicht ein Sensorbauteil gemäss einer Ausführungsform der Erfindung mit noch nicht von den Anschlusselementen abgetrennten Haltezuschnitten,
Fig. 1A in geschnittener fragmentarischer Ansicht ein Detail einer Spritzgiessform zur Bildung eines Sensorbauteils gemäss der Erfindung,
Fig. 2 in einer gegenüber Fig. 1 um 90° gedrehten längsgeschnittenen Ansicht das Sensorbauteil mit abgetrennten Haltezuschnitten und in Position gebogenen Anschlusselementen,
Fig. 3 in längsgeschnittener Ansicht ein Sensorbauteil gemäss einer weiteren Ausführungsform der Erfindung mit einem Steckeraufnahmegehäuse, und
Fig. 4 in einer gegenüber Fig. 3 um 90° gedrehten längsgeschnittenen Ansicht das Sensorbauteil gemäss der weiteren Ausführungsform.

Obschon die Erfindung nachfolgend in Verbindung mit einem elektrischen Sensorbauteil, z.B. für die Erfassung der Umgebungs- oder anderer Temperaturen in einem Kraftfahrzeug beschrieben wird, versteht es sich, dass die Erfindung auf dieses Anwendungsgebiet nicht beschränkt ist. Sie kann vielmehr vorteilhaft immer dann angewandt werden, wenn es gilt, mit metallischen steifen Anschlusselementen, wie Stecker oder Stifte, elektrisch über dünne Leiterpfade verbundene Sensorelemente hermetisch abzuschirmen und permanent zu stützen.

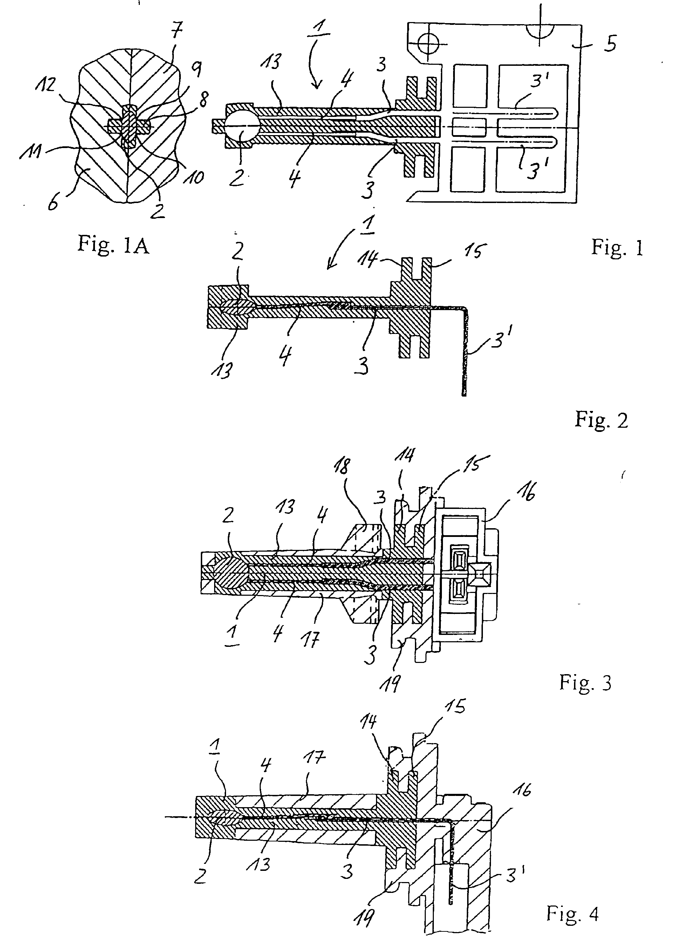

In Fig. 1 und 2 trägt das Sensorbauteil nach der Erfindung das allgemeine Bezugszeichen 1. Das Sensorbauteil 1 hat zumeist eine langgestreckte Konfiguration und umfasst ein Sensorelement 2 nahe einem axialen Ende und ein Paar Anschlusselemente 3 nahe dem anderen axialen Ende. Die Anschlusselemente 3 sind mit dem Sensorelement 2 über ein Paar Leiterpfade 4 elektrisch verbunden. Beim Sensorelement 2 kann es sich z.B. um einen Thermosensor handeln. Das Sensorelement 2 hat eine ballige, z.B. kugel- oder linsen- bzw. pillenförmige Gestalt mit einer grösseren Umfangsabmessung am "Äquator" als an den "Polen".

Aus Gründen, auf die eingangs schon hingewiesen wurde, sollten die Leiterpfade 4 eine geringe Querschnittsabmessung haben, so dass sie im Vergleich zu den vorzugsweise steifen Anschlusselementen 3 einen geringen Widerstand gegen Verformung bieten. Das Sonsorelement 2 und die Anschlusselemente 3 sind vorzugsweise mit den Leiterpfaden 4 verlötet oder verschweisst. Die Anschlusselemente 3 sind vorzugsweise in einem Halte-Blechstreifen 5 ausgebildet. Dieser wird nach der Fertigstellung vom Sensorbauteil 1 in einem abschliessenden Stanzvorgang abgetrennt, wonach nur die Anschlusselemente 3 am Sensorbauteil 1 verbleiben.

Die Anordnung aus dem Sensorelement 2, den Leiterpfaden 4 und den Anschlusselementen 3 wird in einer ersten Fertigungsstufe durch einen Löt- oder Schweissvorgang geschaffen und anschliessend als Einlegeteil in eine Spritzgiessform (nur ein Detail davon ist in Fig. 1A gezeigt) zum Umspritzen mit einem Kunststoffmaterial eingebracht. Dabei wird die Anordnung einerends durch Einklemmen des Halt-Blechstreifens 5 in der Form und anderenends dadurch abgestützt, dass das Sensorelement 2 in Anlage mit einem Widerlager gebracht wird, das an der Form ausgebildet ist und eine Bewegung des Sensorlementes 2 in Richtungen axial entgegengerichtet zu den Leiterpfaden 4 und ferner seitlich zu der axialen Bewegungsrichtung verhindert, um eine Beeinträchtigung der elektrischen Verbindung zu den Leitenpfaden zu vermeiden und die gewünschte zentrische Lage des Sensorelementes im Kunststoffmaterial beizubehalten.

Obschon andere Massnahmen zur vorgenannten Lagefixierung vorgesehen sein können, wird bevorzugt ein Widerlager in Gestalt einer Drei- oder höchstvorzugsweise Vierpunktabstützung vorgesehen, wie sie in Fig. 1A gezeigt ist. In Fig. 1A tragen die zwischen sich den Formraum 8 im zusammengesetzten Zustand bildenden Hälften der Spritzgiessform die Bezugszeichen 6, 7. Nahe einem axialen Ende ist der Formraum 8 im Querschnitt kreuzförmig ausgebildet, so dass an den Schnittpunkten benachbarter "Balken" der Kreuzform je ein Auflager 9-12 geschaffen wird. Vier derartige Auflager 9-12 ergeben sich, die in gleichem Winkelabstand voneinander umfänglich verteilt angeordnet sind und eine zentrale Öffnung mit einer Abmessung umfänglich begrenzen, die kleiner als die umfängliche Abmessung des Sensorelementes 2 an einer Stelle zwischen einem Pol und der Mitte ist. In Folge davon kann ein Umgfangsbereich des Sensorelementes 2 in Anlage mit den Auflagern 9-12 der Spritzgiessform treten, wenn das Sensorlement 2 in diese eingelegt wird, wonach das Sensorelement 2 relativ zur Spritzgiessform lagefixiert und abgestützt ist.

Nach dem Einlegen der vorgefertigte Anordnung aus dem Sensorelement 2, den Leiterpfaden 4 und den Anschlusselementen 3 in die Spritzgiessform wird diese durch Zusammenfahren der Formhälften 6, 7 geschlossen und in den gebildeten Formraum 8 eine Schmelze aus einem geeigneten Kunststoffmaterial von einer Stelle aus eingespritzt, dass die Schmelze mit dem lagefixierten Sensorelement 2 zunächst an einem Oberflächenbereich in Berührung kommt, der den Auflagern 9-12 abgewandt ist. Die Schmelze beaufschlagt dadurch das Sensorelement 2 mit einer Kraft, die dieses in eine feste berührende Eingriffnahme mit den Auflagern 9-12 drückt. Im weiteren Formfüllvorgang umfliesst die Schmelze das Sensorelement 2 auch seitlich und an den Polen, bis dieses mit Ausnahme an den Auflagern 9-12 gänzlich im Kunststoffmaterial der Schmelze eingebettet ist. Schliesslich werden auch die restlichen, noch freien Bereiche des Formraumes nacheinander mit Schmelze gefüllt, und wird dadurch die Anordnung aus dem Sensorelement 2, den Leiterpfaden 4 und den Anschlusselementen 3 in dem Kunststoffmaterial gänzlich eingebettet, wie dies in Fig. 1 gezeigt ist. In Fig. 1 trägt ein auf diese Weise um die Anordnung gebildetes Kunststoff-Formteil das Bezugszeichen 13. Das Spritzgiessen von Kunststoffmaterial in Gegenwart von Einlegeteilen ist im Übrigen dem Fachmann grundsätzlich bekannt und braucht an dieser Stelle nicht näher erläutert zu werden.

Nach dem Erstarren des Kunststoffmaterials wird die Spritzgiessform durch Auseinanderfahren der Formhälften 6, 7 geöffnet und der Formling aus der Form entfernt. Anschliessend wird der Halte-Blechstreifen 5 von aus dem Formteil 13 herausragenden freien Endbereichen 3' der Anschlusselemente 3 durch einen Stanzvorgang abgetrennt. Wenn erwünscht, können die Endbereiche 3' der Anschlusselemente 3 anschliessend abgebogen werden, wie dies in Fig. 2 gezeigt ist. Die Anschlusselemente 3 dienen zur Ableitung der Signale des Sensorelementes 2 an periphere, nicht gezeigte Einrichtungen, z.B. Anzeigegeräte, Regelgeräte oder dgl..

Am äusseren Umfang des Formteils 13 nahe einem Bereich, der den Anschlusselementen 3 zugewandt liegt, können, z.B. flanschförmige, radial vorragende Vorsprungsbereiche 14, 15 ausgebildet sein, die der festen Verankerung eines Steckeraufnahmegehäuses 16 dienen, worauf nachfolgend in Verbindung mit der in Fig. 3 und 4 gezeigten Ausführungsform der Erfindung näher eingegangen wird.

Der Formteil 13 mit dem darin eingebetteten Sensorelement 2, den Leiterpfaden 4 und den Anschlusselementen 3 gemäss Fig. 1 und 2 kann dadurch mit dem Steckeraufnahmegehäuse 16 versehen werden, dass der Formteil 13 in einem weiteren Fertigungsschritt als Einlegeteil in eine weitere der Konfiguration des Steckeraufnahmegehäuses 16 angepasste Spritzgiessform eingebracht wird. In diese wird anschliessend eine Schmelze aus einem geeigneten Kunsstoffmaterial eingeführt, das sich mit dem Kunststoffmaterial des Formteils 13 integral verbindet, wobei die Vorsprungsbereiche 14, 15 eine zusätzliche feste Verankerung des Steckeraufnahmegehäuses 16 am Formteil 13 schaffen. Bei diesem Fertigungsschritt kann, wenn erwünscht, gleichzeitig ein Mantelgehäuse 17 um den Formteil 13 geschaffen werden, der in seiner äusseren Umrisskonfiguration in beliebiger Weise ausgestaltet sein kann, z.B. mit Montagebereichen 18, 19 für den späteren Einsatz. Ausserdem verleiht das Mantelgehäuse 17 dem Formteil 13 zusätzliche Stabilität und Schutz gegen Umwelteinflüsse.

Vorzugsweise bestehen das Steckeraufnahme- und Mantelgehäuse 16, 17 aus gleichem Kunststoffmaterial, welches jedoch unterschiedlich zu dem des Formteils 13 sein kann, doch können unter Anwendung des dem Fachmann grundsätzlich bekannten Zweikomponentenspritzgiessens auch unterschiedliche Kunststoffmaterialien hierfür vorgesehen werden. Ferner kann, wenn erwünscht, bei dem Sensorbauteil gemäss Fig. 1 und 2 ein Formteil 13 mit einer Konfiguration vorgesehen werden, die dem des Mantelgehäuses 17 und/oder Steckeraufnahmegehäuses 16 der Ausführungsform nach Fig. 3 und 4 entspricht.

Obschon die Erfindung vorausgehend anhand von Ausführungsformen beschrieben wurde, bei denen die lagefixierende Abtützung des Sensorelementes 2 längs eines Umfangsbereiches erfolgt, der in Bezug auf dessen Mitte von den Leiterpfaden 4 abgewandt liegt, könnte die Abstützung auch an einem den Leiterpfaden 4 zugwandten Umfangsbereich erfolgen. In diesem Fall wäre darauf zu achten, dass die Schmelze in entsprechender Weise in den Formraum der Spritzgiessform eingeführt wird, damit die Eingriffnahme des Sensorelementes 2 mit den betreffenden Widerlagern verstärkt wird. Als weitere Alternative könnte die lagefixierende Abstützung sowohl an der den Leiterpfaden abgewandten als auch zugewandten Oberfläche des Sensorlementes in im wesentlichen parallel zueinander liegenden unterschiedlichen Ebenen erfolgen. Wesentlich ist in jedem Fall, dass die in die Giessform einströmende Schmelze das Sensorelement wenigstens anfänglich dergestalt mit einer Kraft beaufschlagt, dass dieses in einen engeren Sitz mit wenigstens einem der Auflager gedrückt wird.

## Patentansprüche

1. Verfahren zum Herstellen eines elektrischen Bauteils, bestehend aus einem über metallische Leiterpfade mit metallischen Anschlusselementen elektrisch verbundenen Sensorelement mit einer im wesentlichen balligen Querschnittskonfiguration, wobei wenigstens das Sensorelement und daran angrenzende Bereiche der Leiterpfade von einem Formteil aus einem Kunststoffmaterial umgeben sind, umfassend:
elektrisch leitende Verbindung des Sensorlementes und der Anschlusselemente mit den betreffenden Enden der Leiterpfade,
Eingeben der Anordnung, bestehend aus dem Sensorelement, den Leiterpfaden und den Anschlusselementen, als Einlegeteil in eine Kunststoff-Giessform dergestalt, dass wenigstens das Sensorelement und die angrenzenden Bereiche der Leiterpfade in einer Schmelze aus dem Kunststoffmaterial eingebettet werden, wenn diese in die Giessform eingefüllt wird, wobei das Einlegteil durch eine lagefixierende Einrichtung in der Gießform gehalten ist,
Einfüllen der Schmelze in die Giessform, und
Entfernen des Formteils mit dem darin eingebetteten Sensorelement und den angrenzenden Bereichen der Leiterpfade aus der Giessform nach Erstarren der Schmelze,
**dadurch gekennzeichnet, dass**
das Sensorelement durch die lagefixierende Einrichtung der Giessform gegen eine Bewegung wenigsten in einer axialen Richtung weg von den Leiterpfaden und in Richtungen seitlich dazu gehalten wird, und die in die Giessform einströmende Schmelze wenigstens während des anfänglichen Formfüllvorganges mit einem ausgewählten, entgegengesetzt zu der einen axialen Bewegungsrichtung weisenden Oberflächenbereich des Sensorelementes in Berührung kommt, so dass das Sensorelement mit einer eine feste Anlage mit der lagefixierenden Einrichtung schaffenden Kraft über wenigstens einen wesentlichen zeitlichen Abschnitt des Formfüllvorganges beaufschlagt wird, um das Sensorelement während des Formfüllvorganges in einer vorgegebenen Lage in der Giessform zu halten,

2. Verfahren nach Anspruch 1, **dadurch gekennzeichnet, dass** das Sensorelement in der Giessform an umfänglich voneinander beabstandeten Oberflächenbereichen in wenigstens einer Ebene abgestützt wird.

3. Verfahren nach Anspruch 2, **dadurch gekennzeichnet, dass** eine Dreipunktabstützung vorgesehen wird.

4. Verfahren nach Anspruch 2, **dadurch gekennzeichnet, dass** eine Vierpunktabstützung vorgesehen wird.

5. Verfahren nach einem der vorhergehenden Ansprüche, **dadurch gekennzeichnet, dass** eine Abstützung des Sensorelementes in der Giessform in einer Ebene im wesentlichen senkrecht zur besagten Bewegungsrichtung vorgenommen wird.

6. Verfahren nach einem der vorhergehenden Ansprüche, **dadurch gekennzeichnet, dass** das Sensorelement, die Leiterpfade und ein angrenzender Bereich der Anschlusselemente in dem Kunststoffmaterial beim Formfüllvorgang eingebettet werden.

7. Verfahren nach Anspruch 6, **dadurch gekennzeichnet, dass** an dem Formteil ein freiliegende Endbereiche der Anschlusselemente mit Abstand umgebender Steckeraufnahmebereich ausgebildet wird.

8. Verfahren nach Anspruch 7, **dadurch gekennzeichnet, dass** der Steckeraufnahmebereich **dadurch** gebildet wird, dass in einem weiteren Schritt an dem einen Formteil ein dem Steckeraufnahmebereich entsprechendes weiteres Formteil aus einem Kunststoffmaterial in einem weiteren Giessvorgang angeformt wird.

## Claims

1. A method for manufacturing an electrical component consisting of a sensor element electrically connected by metallic conductive paths to metallic connection elements and having a substantially spherical cross sectional configuration, at least said sensor element and portions of the conductive paths adjacent thereto being surrounded by a moulded part consisting of a plastic material, comprising the steps of:
connecting the sensor element and the connection elements to the associated ends of the conductive paths in an electrically conductive manner,
placing the arrangement consisting of the sensor element, the conductive paths and the connection elements as an insert into a plastic mould such that at least the sensor element and the adjacent portions of the conductive paths will be embedded in a melt of the plastic material when the latter is filled into the mould, whereby the insert is held in
the mould by a position-fixing device,
filling the melt into the mould, and
removing the moulded part having the sensor element and the adjacent portions of the conductive paths embedded therein from the mould after the melt has solidified,
**characterized by**
preventing said sensor element from moving in an axial direction away from the conductive paths and in directions laterally thereof by means of the position-fixing device of the mould, and contacting at least during the initial mould-filling operation the melt flowing into the mould with a selected surface portion of the sensor element opposed to the one axial direction of movement whereby the sensor element is subjected to a force creating firm contact with the position-fixing device over at least a substantial time period of the mould-filling operation for holding the sensor element in a given position in the mould during the mould-filling process.

2. The method according to claim 1, **characterized in that** the sensor element is supported in the mould at mutually spaced peripheral surface portions in at least a single plane.

3. The method according to claim 2, **characterized in that** a three point support is provided.

4. The method according to claim 2, **characterized in that** a four point support is provided.

5. The method according to any of the preceding claims, **characterized in that** support for the sensor element in the mould is effected in a plane substantially perpendicular to said direction of movement.

6. The method according to any of the preceding claims, **characterized in that** the sensor element, the conductive paths and an adjacent portion of the connection elements are embedded in the plastic material during said mould-filling operation.

7. The method according to claim 6, **characterized in that** a plug seating portion surrounding and spaced from the exposed end portions of the connection elements is formed on the moulded part.

8. The method according to claim 7, **characterized in that** the plug seating portion is formed in a further step, **in that** a further moulded part of a plastic material corresponding to the plug seating portion is formed on said one moulded part in a further moulding operation.

## Revendications

1. Procédé de fabrication d'un élément ou pièce électrique se composant d'un élément de capteur relié électriquement à des éléments de connexion métalliques par le biais de chemins conducteurs métalliques, avec une configuration transversale essentiellement convexe, au moins l'élément de capteur et les zones des chemins conducteurs adjacentes à celui-ci étant entourés d'une pièce usinée en matière synthétique ou plastique, comprenant :
un raccordement électriquement conducteur de l'élément de capteur et des éléments de connexion aux extrémités concernées des chemins conducteurs,
l'introduction de l'installation, se composant de l'élément de capteur, des chemins conducteurs et des éléments de connexion, en tant que pièce d'insertion dans un moule en matière plastique de telle manière qu'au moins l'élément de capteur et les zones adjacentes des chemins conducteurs sont intégrés ou coulés dans une masse fondue de matière plastique, lorsque celle-ci est coulée dans le moule, la pièce d'insertion étant maintenue dans le moule par un dispositif de fixation,
le remplissage du moule par la masse fondue, et
le retrait de la pièce usinée avec l'élément de capteur intégré dedans et les zones adjacentes des chemins conducteurs provenant du moule après solidification de la masse fondue,
**caractérisé en ce que**,
l'élément de capteur est protégé par le dispositif de fixation du moule contre un déplacement au moins dans un sens axial en s'éloignant des chemins conducteurs et dans des directions latérales à ceux-ci et la masse fondue s'écoulant dans le moule venant en contact, au moins pendant l'opération initiale de remplissage du moule, avec une zone de surface de l'élément de capteur sélectionnée tournée à l'opposé du sens de déplacement axial, de telle sorte que l'élément de capteur est soumis à une force créant une installation fixe avec le dispositif de fixation sur au moins un tronçon essentiellement temporaire de l'opération de remplissage du moule pour maintenir l'élément de capteur dans le moule dans une position prédéterminée pendant l'opération de remplissage.

2. Procédé selon la revendication 1, **caractérisé en ce que** l'élément de capteur dans le moule est soutenu ou repose sur des zones de surface de pourtour espacées les unes des autres dans au moins un plan.

3. Procédé selon la revendication 2, **caractérisé en ce qu'**un appui ou soutien en trois points est prévu.

4. Procédé selon la revendication 2, **caractérisé en ce qu'**un appui ou soutien en quatre points est prévu.

5. Procédé selon l'une quelconque des revendications précédentes, **caractérisé en ce qu'**un appui ou soutien de l'élément de capteur est réalisé dans le moule sur un plan essentiellement de manière perpendiculaire par rapport audit sens de déplacement.

6. Procédé selon l'une quelconque des revendications précédentes, **caractérisé en ce que** l'élément de capteur, les chemins conducteurs et une zone adjacente des éléments de connexion sont intégrés dans ou coulés dans la masse de la matière plastique lors de l'opération de remplissage.

7. Procédé selon la revendication 6, **caractérisé en ce qu'**une zone de logement du connecteur est réalisée sur la pièce usinée, laquelle zone entoure à distance des zones d'extrémité libres des éléments de connexion.

8. Procédé selon la revendication 7, **caractérisé en ce que** la zone de réception ou de logement du connecteur est formée **en ce que**, lors d'une autre étape, sur une autre pièce usinée réalisée en une matière synthétique ou plastique et correspondant à la zone de réception ou de logement du connecteur est moulée lors d'une autre opération de coulage.
